# EUROPÄISCHE PATENTSCHRIFT

(11) **EP 2 203 349 B1**
(45) Veröffentlichungstag und Bekanntmachung des Hinweises auf die Patenterteilung: **07.03.2012**
(21) Anmeldenummer: 08804715.4
(22) Anmeldetag: 25.09.2008
(51) Int. Cl.: B64D 13/02

(54) **LÜFTUNGSSYSTEM UND AUSLASSVENTIL FÜR EIN FLUGZEUG**
VENTILATION SYSTEM AND OUTLET VALVE FOR AN AIRPLANE
SYSTÈME DE VENTILATION ET SOUPAPE DE SORTIE POUR UN AVION

(30) Priorität: 25.09.2007 DE 102007045755
(43) Veröffentlichungstag der Anmeldung: 07.07.2010
(73) Patentinhaber: Nord-Micro AG & Co. OHG, 60388 Frankfurt (DE)
(72) Erfinder: DREISILKER, Ralf, 42553 Velbert (DE); BENZ, Rainer, 63500 Seligenstadt (DE)
(74) Vertreter: Preissner, Nicolaus
(86) Internationale Anmeldenummer: PCT/EP2008/062816
(87) Internationale Veröffentlichungsnummer: WO 2009/040389

(56) Entgegenhaltungen:
- EP-A- 0 298 946
- WO-A-01/75342
- WO-A-2005/023649
- DE-A1- 3 003 664
- DE-A1- 19 713 125
- GB-A- 1 209 195
- US-A- 3 554 216

## Beschreibung

Die vorliegende Erfindung betrifft ein Auslassventil für ein Flugzeug mit einem Rahmen zur Anordnung in einer Öffnung einer Außenhaut des Flugzeugs, einer in dem Rahmen schwenkbar angeordneten ersten Klappe zur Steuerung eines Strömungsquerschnitts, wenigstens einer ersten Einströmöffnung und wenigstens einer Ausströmöffnung. Weiter betrifft die Erfindung ein Verfahren zur Steuerung eines derartigen Auslassventils.

Auslassventile der eingangs genannten Art werden in Flugzeugen zur Entlüftung der Kabine und zur Einstellung des Kabinendrucks verwendet. Bei gleichmäßigem Einströmen von Luft in die Kabine bildet sich in dieser ein Überdruck relativ zu der Außenseite des Flugzeugs. Das Auslassventil der eingangs genannten Art lässt durch seinen Strömungsquerschnitt, der von einer Klappe bestimmt ist, eine einstellbare Menge Luft pro Zeiteinheit entweichen. Dadurch ist der Druck im Inneren des Flugzeugs mittels der Klappe einstellbar.

Nach der Landung kann es in einem Flugzeug vorkommen, dass der Kabinendruck einen wesentlichen Unterschied zu dem Druck an der Außenseite des Flugzeugs aufweist. Ist der Kabineninnendruck höher als der Druck auf der Außenseite, so werden die Türen des Flugzeugs bei Öffnung durch den Luftdruck plötzlich aufgestoßen. Um diese Gefahr zu vermeiden, werden die Auslassventile eines Flugzeugs im Allgemeinen vor Öffnen der Türen voll geöffnet, um einen Druckausgleich herzustellen.

Die Elektronik eines Flugzeugs wird durch einen Luftstrom gekühlt, der, ähnlich wie die Kabinenluft, mittels eines Einlassventils und eines Auslassventils gesteuert wird. Die zur Kühlung der Elektronik notwendige Luftmenge ist dabei oft wesentlich größer als die zur Belüftung der Kabine notwendige Luftmenge.

Um die Passagiere nicht durch unangenehme Zugluft, Gerüche und Geräusche zu belasten, ist es in Flugzeugen vorgesehen, die Luftströme zur Frischluftversorgung der Kabine und zur Kühlung der Elektronik weitgehend zu trennen. So werden beispielsweise die Luftströme für Hauptkabine und Flugzeugelektronik durch separate Auslassventile abgelassen.

Allein im Falle, dass eines oder mehrere der Ventile versagen und geschlossen bleiben ("failed closed"), werden die Luftströme über eines der verbleibenden Ventile gemeinsam abgelassen. Um dies zu ermöglichen, müssen die einzelnen Ventile vergleichsweise groß ausgelegt sein. Im Fehlerfall werden die Luftströme dann unter Umständen für die Passagiere ungünstig umgeleitet. Ein weiteres Beispiel ist in WO 2006/105049 zu finden.

Ein Auslassventil der eingangs genannten Art ist in der US 2004/0217317 A1 beschrieben. Das dort beschriebene Auslassventil hat einen zylinderförmigen Ventilkörper und eine Klappe, die in dem zylinderförmigen Körper einen Strömungsquerschnitt festlegt und mit der der Querschnitt verschlossen werden kann. Um die Eigenschaften des Ventils bei geringen Öffnungswinkeln der Klappe zu verbessern, sind Wände eingezogen.

Die DE 197 13 125 C2 beschreibt ein Verfahren zur Regulierung des Kabinendrucks in einem Fluggerät und ein Stufenventil zur Verwendung mit diesem Verfahren. Das Stufenventil weist eine große Klappe zur Steuerung eines ausströmenden Luftstroms auf. In die große Klappe ist zur feineren Steuerung des Luftstroms eine kleine Klappe eingearbeitet.

Bei großen Druckunterschieden wird der Luftstrom mittels der Stellung der kleinen Klappe gesteuert. Ist der Druckunterschied gering, so erfolgt die Steuerung des Luftstroms über die Stellung der großen Klappe.

**Aufgabe** der Erfindung ist es, ein Auslassventil der eingangs genannten Art bereitzustellen, das einen vereinfachten Aufbau des Belüftungssystems eines Flugzeugs ermöglicht.

Zur Lösung dieser Aufgabe wird gemäß Patentanspruch 1 ein Lüftungssystem vorgeschlagen, und gemäß Patentanspruch 2 ein Auslassventil der eingangs genannten Art vorgeschlagen, das eine zweite Einströmöffnung aufweist, die mittels eines ansteuerbaren Stellglieds verschließbar ausgebildet ist.

Das erfindungsgemäße Auslassventil hat insbesondere den Vorteil, dass es zwei Entlüftungswege zu einer Entlüftungsöffnung in der Außenhaut eines Flugzeugs zusammenfassen kann. Dadurch verringert sich die Anzahl der aerodynamisch und strukturell ungünstigen Stellen an der Außenhaut des Flugzeugs. Weiterhin ist es möglich, Luftströme gezielt über wenige Auslassventile abzulassen und so die Komplexität des Lüftungssystems zu reduzieren. Im günstigsten Fall ist es möglich, auf einzelne Ventile vollständig zu verzichten.

Vorteilhafte Ausgestaltungen sind Gegenstand der Unteransprüche.

Vorteilhaft weist der Rahmen eine Auflagefläche auf, an die das Stellglied zum Verschließen der zweiten Einströmöffnung anlegbar ist. Dadurch ist eine einfache Herstellbarkeit gewährleistet.

Das Stellglied ist in vorteilhafter Ausgestaltung zylinderförmig ausgebildet, so dass es sich auf einfache Weise in ein Auslassventil mit zylindrischer Grundform einfügen lässt.

Die Auflagefläche kann vorteilhaft ringförmig ausgebildet sein, um sich der Form des Stellgliedes anzupassen.

Das Stellglied und die Auflagefläche können in vorteilhafter Ausgestaltung eine rechteckige Grundform aufweisen.

Vorteilhafterweise ist die Ausströmöffnung im Wesentlichen rechteckig ausgebildet. Dies trägt dazu bei, energetische Vorteile der Ausströmung, beispielsweise bei der Schubrückgewinnung, auszunutzen.

Die Ausströmöffnung kann im Wesentlichen kreisförmig oder oval ausgebildet sein.

Die erste Klappe ist vorteilhaft um eine Achse schwenkbar, die in dem Rahmen befestigt ist. Dadurch ist eine präzise Ausrichtung der Klappe an dem Rahmen möglich.

Die erste Klappe kann eine schwenkbare zweite Klappe aufweisen, durch die bei geschlossener erster Klappe ein Teil der Ausströmöffnung freigebbar ist. Dadurch ist es möglich, besonders kleine Strömungsquerschnitte auf einfache Art und Weise zu erzeugen.

In weiterer vorteilhafter Ausgestaltung ist der Rahmen beweglich mit einer Zuleitung verbunden, wobei ein flexibles Verbindungselement zur Verbindung des Rahmens mit der Zuleitung vorgesehen sein kann.

Der Rahmen weist vorteilhaft Aussparungen auf, welche die zweite Ausströmöffnung festlegen. Durch diese einteilige Ausführung wird die Montage des Auslassventils vereinfacht.

Der Rahmen weist vorteilhaft einen konvergierenden Verengungselement auf. Dieses Verengungselement, in der Art einer Düse, bewirkt bei seiner Durchströmung einen Venturieffekt, durch den im Bereich der weiteren Einströmöffnungen ein Unterdruck erzeugt wird, der ein Absaugen der Luftströme bewirkt. Dadurch kann auf zusätzliche Einrichtungen zum Lufttransport verzichtet werden.

Vorteilhaft wird der ersten Einströmöffnung Abluft aus einem Elektronikbereich und der zweiten Einströmöffnung Kabinenluft zugeführt.

Weiter wird gemäß Patentanspruch 16 ein Verfahren zur Steuerung des erfindungsgemäßen Auslassventils vorgeschlagen, bei dem in einer ersten Flugphase, bei der sich das Flugzeug am Boden befindet und sich nur mit geringer Geschwindigkeit fortbewegt, die erste Klappe öffnet. Dadurch ist ein einfacher und schneller Druckausgleich möglich. In einer zweiten Flugphase, in der sich das Flugzeug im Flug befindet, kann die erste Klappe geschlossen und der Strömungsquerschnitt durch die zweite Klappe gesteuert werden. Dies hat den Vorteil, dass die durch den im Flug hohen Druckunterschied zwischen Außen- und Innenseite des Flugzeugs besonders schnell fließende Luftströmung in einem kleinen Querschnitt präziser gesteuert werden kann.

Bei Bedarf kann das Stellglied die zweite Einströmöffnung freigeben. Dies kann sowohl zum Druckausgleich als auch zur Unterstützung beziehungsweise zum Funktionsersatz anderer Auslassventile geschehen.

Die Erfindung wird nachfolgend anhand eines Ausführungsbeispieles näher erläutert, das in den beigefügten Zeichnungen schematisch dargestellt ist. Es zeigen:
- Fig. 1: einen Querschnitt durch ein Auslassventil gemäß einer Ausführungsform der vorliegenden Erfindung während einer ersten Flugphase;
- Fig. 2: eine Ansicht wie in Fig. 1 während einer zweiten Flugphase;
- Fig. 3: eine Ansicht wie in Fig. 2, wobei das Stellglied die zweite Einströmöffnung freigibt;

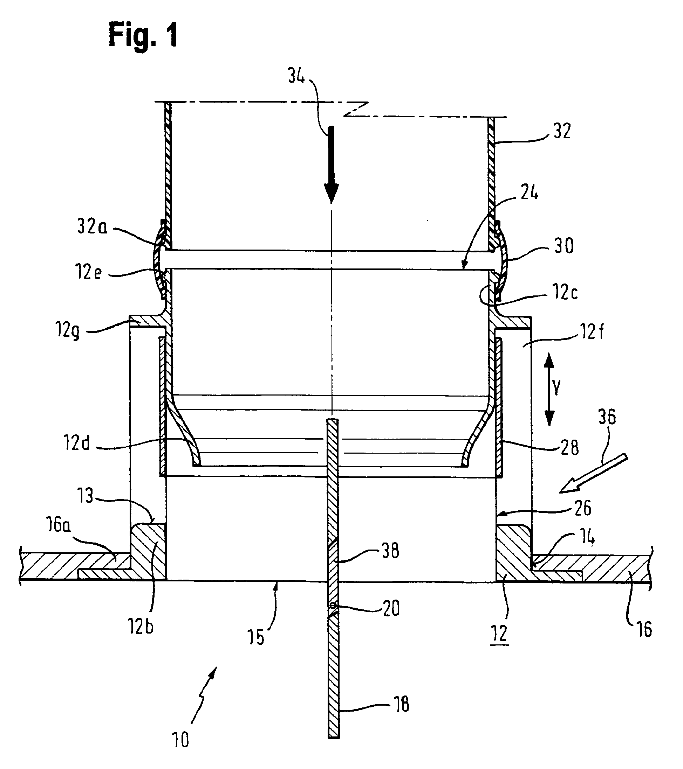

Die in Fig. 1 gezeigte Ausführungsform eines Auslassventils 10 weist einen Rahmen 12 auf, der in eine Öffnung 14 einer Außenhaut 16 eines Flugzeugs eingebaut ist. Um die Montage zu vereinfachen, ist an der Öffnung 14 ein Zentrierflansch 16a in der Außenhaut 16 vorgesehen, in den der Rahmen 12 eingesetzt wird. Der Rahmen 12 weist einen Auslassabschnitt 12b auf, der eine kreisförmige Ausströmöffnung 15 festlegt.

Die Ausströmöffnung 15 ist mittels einer ersten Klappe 18 verschließbar. Die erste Klappe 18 ist dazu um eine Achse (nicht gezeigt) schwenkbar, die an dem Rahmen 12 befestigt ist. Abhängig von der Stellung der ersten Klappe 18 wird die Ausströmöffnung 15 in einem bestimmten Umfang freigegeben.

In der ersten Klappe 18 ist eine zweite Klappe 38 vorgesehen, mittels der ein im Wesentlichen rechteckiger Abschnitt der Ausströmöffnung 15 freigegeben werden kann, wenn die erste Klappe 18 geschlossen ist.

Der Rahmen 12 weist weiter einen Einlassabschnitt 12c auf, der eine erste Einlassöffnung 24 zur Einleitung von Abluft 34 aus der Elektronik des Flugzeugs festlegt. Der Einlassabschnitt 12c ist zylindrisch ausgebildet und hat in Strömungsrichtung der Abluft 34 ein konvergierendes Verengungselement 12d.

Der Einlassabschnitt 12c weist an der ersten Einströmöffnung 24 eine umlaufende Befestigungsnase 12e auf, an der ein elastisches Verbindungselement 30 befestigt ist, das den Einlassabschnitt 12c mit einer Zuleitung 32 verbindet. Durch die Zuleitung 32 wird die Abluft 34 von der Flugzeugelektronik an das Auslassventil 10 herangeführt. Die Zuleitung 32 weist ihrerseits ebenfalls eine Befestigungsnase 32a zur Befestigung des Verbindungselements 30 auf.

Zwischen Einlassabschnitt 12c und Auslassabschnitt 12b weist der Rahmen 12 Aussparungen 12f auf, die eine zweite Einlassöffnung 26 begrenzen. Durch die zweite Einlassöffnung 26 kann zusätzlich zu der Abluft 34 Kabinenluft 36 durch das Auslassventil 10 ausströmen.

Die zweite Einlassöffnung 26 ist mittels eines in den Aussparungen 12f angeordneten Stellgliedes 28 verschließbar ausgebildet.

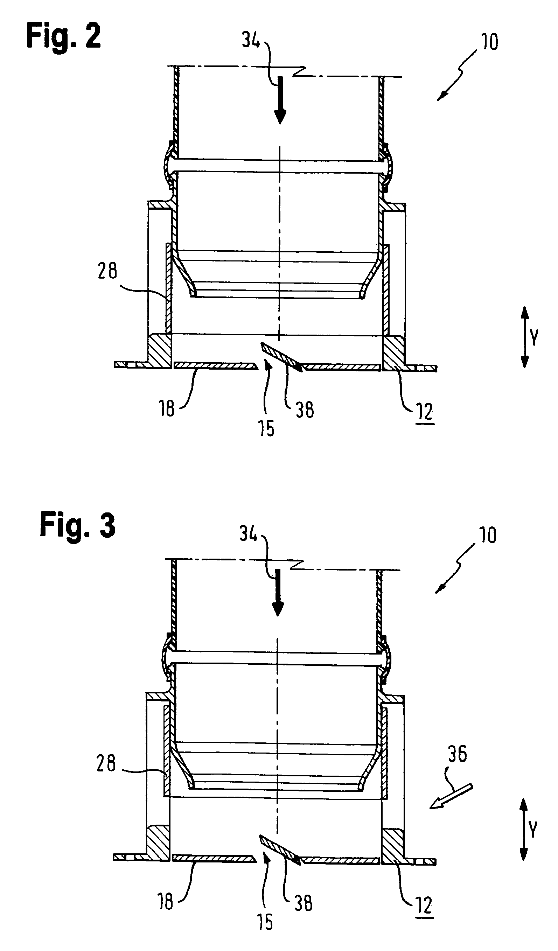

Das Stellglied 28 ist zylindrisch ausgebildet und am Außenumfang des Einlassabschnitts 12c und des Verengungselements 12d beweglich angeordnet. Durch eine (nicht gezeigte) Ansteuerung ist das Stellglied 28 in einer Richtung y verstellbar. Wird das Stellglied 28, wie in Fig. 2 gezeigt, so verstellt, dass es an einer Auflagefläche 13 des Rahmens 12 anliegt, so ist die zweite Einlassöffnung 26 vollständig verschlossen.

Der Rahmen 12 weist an dem Einlassabschnitt 12c einen Anschlag 12f auf, der die Bewegung des Stellglieds 28 begrenzt und somit eine maximale Öffnung der zweiten Einlassöffnung 26 festlegt.

In Fig. 1 ist das Auslassventil 10 für den Fall dargestellt, dass sich das Flugzeug am Boden befindet. Allgemein werden die Türen des Flugzeugs nicht geöffnet, bevor der Druckunterschied zwischen Innen- und Außenseite auf wenige mbar abgesunken ist. Aufgrund des geringen Druckunterschieds ist die volle Fläche der Ausströmöffnung 15 nötig, um einen schnellen Druckausgleich sicherzustellen. Um einen guten Druckausgleich der Flugzeugelektronik und der Kabine mit der Außenwelt zu ermöglichen, ist das Stellglied 28 daher bis zu dem Anschlag 12f angehoben und die erste Klappe 18 geöffnet.

Die durch das Auslassventil 10 ausströmende Abluft 34 wird in dem Verengungselement 12d durch die Querschnittsreduktion beschleunigt. Durch den Venturieffekt bildet sich am Ausgang des Verengungselementes 12d ein Unterdruck aus, der die Kabinenluft 36 durch die zweite Einströmöffnung 26 ansaugt. Der aus Abluft 34 und Kabinenluft 36 gemischte Luftstrom kann dann durch die weit geöffnete Ausströmöffnung 15 aus dem Flugzeug ausströmen.

Befindet sich das Flugzeug jedoch, wie in Fig. 2 gezeigt, in einer zweiten Flugphase, beispielsweise auf 43.000 ft., so ist ein ausgeprägter Druckunterschied zwischen Außen- und Innenseite des Flugzeugs festzustellen. In diesem Ausführungsbeispiel wird davon ausgegangen, dass in der Kabine ein Druck von 770 mbar und an der Außenseite des Flugzeugs ein Druck von 162 mbar herrscht.

In dieser Flugphase ist das Stellglied 28 geschlossen und liegt auf dem Rahmen 12 auf. Die Kabinenluft 36 wird über andere Ventile ausgeleitet.

Bei dieser Druckdifferenz ist eine zuverlässige und genaue Steuerung der ausströmenden Luftmenge durch die erste Klappe 18 allein nicht mehr gewährleistet. Die erste Klappe 18 ist daher in diesem Fall geschlossen. Stattdessen wird der Strömungsquerschnitt der Ausströmöffnung 15 durch die zweite Klappe 38 festgelegt, die um eine Achse 20 schwenkbar ist. Mit Hilfe der zweiten Klappe 38 kann somit die Menge der ausströmenden Luft gesteuert werden.

Durch das Zusammenwirken mehrerer Auslassventile 10 ist eine Steuerung der Luftströme in der Kabine des Flugzeugs möglich (Flowregelung).

Die zweite Klappe 38 hat eine wesentlich kleinere Fläche als die erste Klappe 18. Durch die kleinere Verschlussfläche sind zur Positionierung der zweiten Klappe 38 geringere Kräfte nötig als zur Positionierung der ersten Klappe 18. Die Stellung der zweiten Klappe 38 kann dadurch präziser als die der ersten Klappe 18 gesteuert werden.

Sollte sich bei den anderen Ventilen, über die die Kabinenluft 36 ausgeleitet wird, eine Funktionsstörung ergeben, so ist es möglich, wie es in Fig. 3 gezeigt ist, das Stellglied 28 anzuheben, und so die Kabinenluft 36 durch das Auslassventil 10 kontrolliert abzulassen. Das Auslassventil 10 ersetzt in diesem Fall die Funktion der ausgefallenen Ventile.

In einer zweiten Ausführungsform weist der Rahmen 12 eine Nut auf, die entsprechend der Form des Stellgliedes 28 so ausgebildet ist, dass das Stellglied 28 in geschlossenem Zustand auf dem Boden der Nut aufliegt. Dadurch wird die Dichtwirkung im geschlossenen Zustand erhöht.

Um die Dichtwirkung weiter zu verbessern, ist an dem Boden der Nut eine Wulst angeordnet, die eventuelle Zwischenräume zwischen Stellglied 28 und Rahmen 12 zuverlässig abdichtet.

Die Öffnung 14 kann auch mehreckig oder rund ausgeführt werden. Die genaue Form der Öffnung 14 ist somit auf die jeweilige Einbauposition und aerodynamische Gesichtspunkte, wie beispielsweise Schubrückgewinnung, abstimmbar.

Weiter ist es möglich, dass Stellglied 28 und die erste Klappe 18 mittels eines Zwangsmechanismus zu verbinden, so dass eine Positionsänderung des Stellglieds 28 eine Rotation der ersten Klappe 18 bewirkt.

Das erfindungsgemäße Auslassventil 10 führt mehrere Abluftwege in einem Flugzeug zusammen und ermöglicht so eine einfache Entlüftung der Kabine selbst im Fehlerfall einzelner Ventile, die einfache Druckregelung in der zweiten Flugphase sowie einen schnellen und effizienten Druckausgleich in der ersten Flugphase.

### Bezugszeichenliste

- 10: Auslassventil
- 12: Rahmen
- 12b: Auslassabschnitt
- 12c: Einlassabschnitt
- 12d: Verengungselement
- 12e: Befestigungsnase
- 12f: Aussparung
- 12g: Anschlag
- 13: Auflagefläche
- 14: Öffnung
- 15: Ausströmöffnung
- 16: Außenhaut
- 16a: Zentrierflansch
- 18: erste Klappe

- 20: Achse
- 24: erste Einströmöffnung
- 26: zweite Einströmöffnung
- 28: Stellglied

- 30: Verbindungselement
- 32: Zuleitung
- 32a: Befestigungsnase
- 34: Abluft
- 36: Kabinenluft
- 38: zweite Klappe

- y: Richtung

## Patentansprüche

1. Lüftungssystem für ein Flugzeug, mit einem in der Außenhaut des Flugzeugs angeordneten Auslassventil (10), das eine erste Einströmöffnung (24) für Abluft aus einem Elektronikbereich und eine zweite Einströmöffnung (26) für Kabinenabluft aufweist und wobei eine einzige Ausströmöffnung (15) vorgesehen ist.

2. Auslassventil (10) für ein Lüftungssystem nach Anspruch 1, mit einem Rahmen (12) zur Anordnung in einer Öffnung (14) einer Außenhaut (16) des Flugzeugs, einer in dem Rahmen (12) schwenkbar angeordneten ersten Klappe (18) zur Steuerung eines Strömungsquerschnitts, wenigstens einer ersten, durch einen zylindrischen Einlassabschnitt (12c) des Rahmens (12) begrenzten, Einströmöffnung (24), einer zweiten Einströmöffnung (26) und einer einzigen durch einen Auslassabschnitt (12b) begrenzten Ausströmöffnung (15), **dadurch gekennzeichnet, dass** die zweite Einströmöffnung (26) durch im Rahmen (12) vorgesehene Aussparungen (12f) gebildet ist und dass die zweite Einströmöffnung (26) mittels eines ansteuerbaren zylinderförmigen Stellglieds (28) verschließbar ist, das bezüglich des Rahmens (12) beweglich angeordnet ist.

3. Auslassventil (10) nach Anspruch 2, **dadurch gekennzeichnet, dass** der Rahmen (12) eine Auflagefläche (13) aufweist, an die das Stellglied (28) zum Verschließen der zweiten Einströmöffnung (26) anlegbar ist.

4. Auslassventil (10) nach Anspruch 2 oder 3, **dadurch gekennzeichnet, dass** die Auflagefläche (13) ringförmig ausgebildet ist.

5. Auslassventil nach Anspruch 2, **dadurch gekennzeichnet, dass** die Auflagefläche (13) mit einer rechteckigen Grundform ausgebildet ist.

6. Auslassventil (10) nach einem der voranstehenden Ansprüche, **dadurch gekennzeichnet, dass** die Ausströmöffnung (15) im Wesentlichen rechteckig ausgebildet ist.

7. Auslassventil (10) nach einem der voranstehenden Ansprüche, **dadurch gekennzeichnet, dass** die Ausströmöffnung (15) im Wesentlichen kreisförmig oder oval ausgebildet ist.

8. Auslassventil (10) nach einem der voranstehenden Ansprüche, **dadurch gekennzeichnet, dass** die erste Klappe (18) um eine Achse schwenkbar ist, die in dem Rahmen (12) befestigt ist.

9. Auslassventil (10) nach einem der voranstehenden Ansprüche, **dadurch gekennzeichnet, dass** die erste Klappe (18) eine um eine Achse (20) schwenkbare zweite Klappe (38) aufweist, durch die bei geschlossener erster Klappe (18) ein Teil der Ausströmöffnung (15) freigebbar ist.

10. Auslassventil (10) nach einem der voranstehenden Ansprüche, **dadurch gekennzeichnet, dass** der Rahmen (12) beweglich mit einer Zuleitung (32) verbunden ist.

11. Auslassventil (10) nach Anspruch 10, **dadurch gekennzeichnet, dass** der Rahmen (12) mittels eines flexiblen Verbindungselements (30) mit der Zuleitung (32) verbunden ist.

12. Auslassventil (10) nach einem der voranstehenden Ansprüche, **dadurch gekennzeichnet, dass** der Rahmen (12) ein konvergierendes Verengungselement (12d) aufweist.

13. Auslassventil (10) nach einem der voranstehenden Ansprüche, **dadurch gekennzeichnet, dass** der ersten Einströmöffnung (24) Abluft (34) aus einem Elektronikbereich und der zweiten Einströmöffnung (26) Kabinenluft (36) zugeführt wird.

14. Verfahren zur Steuerung eines Auslassventils (10) nach Anspruch 9 und einem der voranstehenden Ansprüche 10 bis 13, **dadurch gekennzeichnet, dass** in einer ersten Flugphase, bei der sich das Flugzeug am Boden befindet und sich nur mit geringer Geschwindigkeit fortbewegt, die erste Klappe (18) geöffnet wird und dass in einer zweiten Flugphase, in der sich das Flugzeug im Flug befindet, die erste Klappe (18) geschlossen wird und die zweite Klappe (38) den Strömungsquerschnitt steuert.

15. Verfahren nach Anspruch 14, **dadurch gekennzeichnet, dass** das Stellglied (28) bei Bedarf die zweite Einströmöffnung (26) zum Druckausgleich freigibt.

## Claims

1. Ventilation system for an aircraft, with an outlet valve (10), positioned in the outer shell of the aircraft, having a first inlet opening (24) for exhaust air from an electronics area and a second inlet opening (26) for cabin air, and wherein one single outlet opening (15) is provided.

2. Outlet valve (10) for a ventilation system according to claim 1 with a frame (12) for mounting in an opening (14) of an outer shell (16) of the aircraft, a first flap (18) pivotally mounted in the frame (12) for controlling a flow cross-section, at least a first inlet opening (24) limited by a cylindrical opening section (12c) of the frame (12), a second inflow opening (26) and one single outlet opening (15) limited by an outlet section (12b), **characterised in that** the second inlet opening (26) is formed by recesses (12f) provided in the frame (12) and that the second inlet opening (26) can be closed by means of a controllable cylindrically shaped adjustable member (28) which is arranged so that it can be moved in relation to the frame (12).

3. Outlet valve (10) according to claim 2 **characterised in that** the frame (12) has a contacting surface (13) against which the adjustable member (28) abuts to close the second inlet opening (26).

4. Outlet valve (10) according to claim 2 or 3 **characterised in that** the contacting surface (13) is ring-shaped.

5. Outlet valve (10) according to claim 2 **characterised in that** the contacting surface (13) has a fundamentally rectangular shape.

6. Outlet valve (10) according to one of the previous claims **characterised in that** the outlet opening (15) is essentially rectangular in shape.

7. Outlet valve (10) according to one of the previous claims **characterised in that** the outlet opening (15) is essentially circular or oval in shape.

8. Outlet valve (10) according to one of the previous claims **characterised in that** the first flap (18) is pivoted on an axle which is mounted in the frame (12).

9. Outlet valve (10) according to one of the previous claims **characterised in that** the first flap (18) is provided with a second flap (38) which can pivot on an axle (20) and which enables part of the outlet opening (15) to be opened when the first flap (18) is closed.

10. Outlet valve (10) according to one of the previous claims **characterised in that** the frame (12) is flexibly connected to a supply duct (32).

11. Outlet valve (10) according to claim 10 **characterised in that** the frame (12) is flexibly connected to a supply duct (32) by means of a connection element (30).

12. Outlet valve (10) according to one of the previous claims **characterised in that** the frame (12) is provided with a converging constriction element (12d).

13. Outlet valve (10) according to one of the previous claims **characterised in that** the first inlet opening (24) is fed with exhaust air (34) from an electronics area and the second inlet opening (26) is fed with air from the cabin (36)

14. Method for controlling an outlet valve (10) according to claim 9 and one of the preceding claims 10 to 13 **characterised in that** during a first flight phase in which the aircraft is on the ground and travels only at low speeds the first flap (18) is opened and that in a second flight phase in which the aircraft is in flight, the first flap (18) is closed and the second flap (38) controls the cross-section of the flow.

15. Method according to claim 14 **characterised in that** the adjustable member (28) opens the second inlet opening (26), when required, to achieve pressure equalisation.

## Revendications

1. Système de ventilation pour un avion, comprenant une vanne de sortie (10) agencée dans la peau extérieure de l'avion, qui comprend une première ouverture d'entrée (24) pour de l'air vicié provenant d'une zone électronique et une seconde ouverture d'entrée (26) pour de l'air vicié provenant de la cabine, et dans lequel il est prévu une seule ou verture de sortie (15).

2. Vanne de sortie (10) pour un système de ventilation selon la revendication 1, comprenant un cadre (12) à agencer dans une ouverture (14) d'une peau extérieure (16) de l'avion, un premier volet (18) agencé pivotant dans le cadre (12) pour commander une section d'écoule ment, au moins une première ouverture d'entrée (24), délimitée par un tronçon d'entrée cylindrique (12c) du cadre (12), une seconde ouverture d'entrée (26), et une unique ouverture de sortie (15) délimitée par un tronçon de sortie (12b), **caractérisée en ce que** la seconde ouverture d'entrée (26) est formée par des échancrures (12f) ménagées dans le cadre (12), et **en ce que** la seconde ouverture d'entrée (26) est obturable au moyen d'un organe de positionnement (28) de forme cylindrique capable d'être piloté, qui est agencé mobile par rapport au cadre (12).

3. Vanne de sortie (10) selon la revendication 2, **caractérisée en ce que** le cadre (12) comporte une surface d'appui (13) contre laquelle l'organe de positionnement (28) peut être appuyé pour obturer la seconde ouverture d'entrée (26).

4. Vanne de sortie (10) selon la revendication 2 ou 3, **caractérisée en ce que** la surface d'appui (13) est réalisée sous forme annulaire.

5. Vanne de sortie selon la revendication 2, **caractérisée en ce que** la surface d'appui (13) est réalisée avec une forme de base rectangulaire.

6. Vanne de sortie (10) selon l'une des revendications précédentes, **caractérisée en ce que** l'ouverture de sortie (15) est réalisée sensiblement rectangulaire.

7. Vanne de sortie (10) selon l'une des revendications précédentes, **caractérisée en ce que** l'ouverture de sortie (15) est réalisée essentiellement sous forme circulaire ou ovale.

8. Vanne de sortie (10) selon l'une des revendications précédentes, **caractérisée en ce que** le premier volet (18) est capable de pivoter autour d'un axe qui est fixé dans le cadre (12).

9. Vanne de sortie (10) selon l'une des revendications précédentes, **caractérisée en ce que** le premier volet (18) comprend un second volet (38), capable de pivoter autour d'un axe (20) et au moyen duquel une partie de l'ouverture de sortie (15) peut être dégagée alors que le premier volet (18) est fermé.

10. Vanne de sortie (10) selon l'une des revendications précédentes, **caractérisée en ce que** le cadre (12) est relié de façon mobile à un conduit d'amenée (32).

11. Vanne de sortie (10) selon la revendication 10, **caractérisée en ce que** le cadre (12) est relié au conduit d'amenée (32) au moyen d'un élément de liaison flexible (30).

12. Vanne de sortie (10) selon l'une des revendications précédentes, **caractérisé en ce que** le cadre (12) comprend un élément de rétrécissement convergent (12d).

13. Vanne de sortie (10) selon l'une des revendications précédentes, **caractérisée en ce que** de l'air vicié (34) provenant d'une zone électronique est amené à la première ouverture d'entrée (24) et **en ce que** de l'air vicié (36) de la cabine est amené à la seconde ouverture d'entrée (26).

14. Procédé pour la commande d'une vanne de sortie (10) selon la revendication 9 et l'une des revendications de précédentes 10 à 13, **caractérisé en ce que**, dans une première phase de vol dans laquelle l'avion se trouve au sol et se déplace seulement à faible vitesse, le premier volet (18) est ouvert, et **en ce que**, dans une seconde phase de vol dans laquelle l'avion se trouve en vol, le premier volet (18) est fermé et le second volet (38) commande la section d'écoulement.

15. Procédé selon la revendication 14, **caractérisé en ce que** l'organe de positionnement (28) dégage en cas de besoin la seconde ouverture d'entrée (26) pour l'égalisation de pression.
